# DEMANDE DE BREVET EUROPEEN

(11) **EP 0 743 770 A1**
(43) Date de publication de la demande: **20.11.1996**
(21) Numéro de dépôt: 96401079.7
(22) Date de dépôt: 15.05.1996
(51) Int. Cl.: H04J 3/14, H04J 3/08

(54) **Dispositif de transfert d'informations entre deux signaux numériques et générateur de signaux utilisant un tel dispositif de transfert d'informations**

(30) Priorité: 18.05.1995 FR 9505935
(71) Demandeur: OPTRAN TECHNOLOGIES, 94000 Creteil (FR)
(72) Inventeur: Wilbrod, Jean-Hubert Michel, 94100 St Maur des Fosses (FR)
(74) Mandataire: Moncheny, Michel

(57) **Abrégé**

Ce dispositif de transfert d'informations entre deux signaux numériques comporte des moyens de sélection (26,44;62,86) de caractéristiques d'un signal numérique d'entrée, des moyens de transmission directe (28,46;78,94) vers un signal numérique de sortie et des moyens de positionnement (28,46;80;114) dans celui-ci, d'éléments du signal d'entrée véhiculant des premières caractéristiques autorisées, par les moyens de sélection à être directement transférées vers le signal de sortie, des moyens de mesure (30,32,48,50;72,74,90,92,98) de deuxième caractéristiques du signal d'entrée identifiées par les moyens de sélection, et des moyens de modification (78,80,102,110) du signal de sortie à partir des valeurs de mesure des deuxièmes caractéristiques de telle sorte que lesdites deuxièmes caractéristiques du signal de sortie et du signal d'entrée soient identiques.

## Description

La présente invention se rapporte à un dispositif de transfert d'informations entre deux signaux numériques et se rapporte en particulier à un générateur de signaux numériques de données à haut débit à partir de signaux numériques de données à bas débit et à un générateur de signaux numériques de données à bas débit à partir de signaux numériques de données à haut débit incorporant un tel dispositif de transfert de données.

L'invention se rapporte en particulier à un générateur de signaux numériques de données à haut débit à partir de signaux numériques de données à bas débit et à un générateur de signaux numériques de données à bas débit à partir de signaux numériques de données à haut débit permettant d'assurer la mesure de conduits de transmission de données numériques à très haut débit.

La mesure d'un conduit de transmission de données numériques à très haut débit s'effectue en transmettant dans le conduit un signal numérique de données à haut débit dont chacune des données est modifiable, par exemple le rythme du signal, les alarmes, les erreurs... et en analysant ensuite chacune de ces caractéristiques de façon simultanée.

Les dispositifs actuels d'émission de signaux numériques de données à haut débit génèrent le rythme du signal à haut débit, puis utilisent ce rythme pour engendrer le contenu binaire du signal numérique de données à haut débit, en lui incorporant des données issues d'un signal numérique d'entrée véhiculant des données à bas débit. En aval, des fonctions d'injection d'erreurs ou d'alarmes permettent à un utilisateur de perturber le signal émis.

Par ailleurs, les générateurs connus de signaux numériques de données à bas débit assurant la réception des signaux numériques de données à haut débit détectent chacune des caractéristiques afférentes au signal de données à haut débit, par exemple perte de signal, perte de trame, sortie de synchronisation de trame,..., et transmettent ces caractéristiques à un système de traitement en vue d'assurer leur détection et leur enregistrement.

Dans ces dispositifs connus, toutes les caractéristiques, et en particulier les caractéristiques d'erreur, d'alarme et de fréquence du signal numérique de données à haut débit ne sont pas transmises intégralement vers le signal numérique de données à bas débit.

En outre, ces dispositifs n'assurant pas de conversion entre un signal numérique de données à bas débit et un signal de données numériques à haut débit, ils ne permettent pas d'assurer la mesure de conduits de transmission de données numériques à très haut débit à partir d'un signal de données numériques à bas débit délivré par un générateur de signaux numériques de données à bas débit dont une très grande variété existe sur le marché.

Le but de l'invention est de pallier ces inconvénients.

Elle a donc pour objet un dispositif de transfert d'informations entre deux signaux numériques, véhiculés par au moins un module de transmission de signaux, caractérisé en ce qu'il comporte des moyens de sélection de caractéristiques d'un signal numérique d'entrée contenant lesdites informations, des moyens de transmission directe vers un signal numérique de sortie et des moyens de positionnement dans celui-ci, d'éléments du signal d'entrée véhiculant des premières caractéristiques autorisées, par les moyens de sélection à être directement transférées vers le signal de sortie de telle sorte qu'une variation desdites premières caractéristiques dudit signal d'entrée provoque une variation identique des premières caractéristiques dudit signal de sortie, des moyens de mesure de deuxième caractéristiques du signal d'entrée identifiées par les moyens de sélection, et des moyens de modification du signal de sortie reliés aux moyens de mesure et adaptés pour modifier le signal de sortie à partir des valeurs des deuxièmes caractéristiques fournies par lesdits moyens de mesure de telle sorte que lesdites deuxièmes caractéristiques du signal de sortie et du signal d'entrée soient identiques.

Le dispositif de transfert selon l'invention peut en outre comporter une ou plusieurs caractéristiques suivantes :
- le signal numérique d'entrée est un signal tramé et le dispositif comporte en outre des moyens d'extraction du rythme du signal d'entrée, lesdits moyens de sélection comprenant un ensemble de compteurs synchronisés avec ledit signal d'entré et adaptés pour assurer une division dudit rythme en vue de l'obtention d'une trame dudit signal d'entrée, et des moyens de décodage adaptés pour assurer la détection des données de ladite trame ;
- les moyens de transmission directe comprennent des moyens d'échantillonnage desdits éléments du signal d'entrée contenant lesdites premières caractéristiques autorisées par lesdits moyens de sélection à être directement transférée vers le signal de sortie ;
- les premiers moyens de positionnement et les moyens de modification comportent des moyens de multiplexage d'éléments du signal d'entrée avec le signal de sortie, alimentés par ledit signal d'entrée et par les signaux provenant desdits moyens de sélection ;
- les moyens de mesure des deuxièmes caractéristiques du signal d'entrée comportent des moyens de calcul desdites deuxièmes caractéristiques à partir d'éléments du signal d'entrée provenant des moyens de sélection ;
- les moyens de sélection, les moyens de transmission directe, les moyens de modification et les moyens de positionnement sont constitués chacun par des circuits de composants logiques.

Un autre objet de l'invention est un générateur de signaux de données à haut débit à partir de signaux numériques de données à bas débit, caractérisé en ce qu'il comporte un dispositif de transfert d'informations tel que défini ci-dessus, et en ce qu'il comporte des moyens de multiplication de fréquence, reliés aux moyens d'extraction de rythme et aux moyens de modification, en vue d'engendrer, à partir d'un signal délivré par les moyens d'extraction de rythme un signal d'horloge pour le signal numérique de données à haut débit.

Avantageusement, il comporte en outre des moyens de mémorisation de données reliés aux moyens de transmission directe et des moyens de sélection de données en vue d'assurer sélectivement le transfert, vers le signal numérique de données à haut débit, de données du signal numérique de données à bas débit et desdites données stockées dans les moyens de mémorisation.

De préférence, les deuxièmes caractéristiques du signal numérique de données à bas débit sont constituées par des données comprenant une erreur sur un mot de verrouillage de trame et/ou une erreur sur un mot de surveillance d'erreur d'une section élémentaire régénérée du signal à bas débit.

Un autre objet de l'invention est un générateur de signaux numériques de données à bas débit à partir de signaux numériques de données à haut débit, caractérisé en ce qu'il comporte un dispositif de transfert d'informations tel que défini ci-dessus, et en ce qu'il comporte des moyens de division de fréquence reliés aux moyens d'extraction de rythme et aux moyens de modifications en vue d'engendrer, à partir du signal délivré par lesdits moyens d'extraction de rythme, un signal d'horloge pour un signal numérique de données à bas débit.

Avantageusement, les deuxièmes caractéristiques du signal numérique de données à haut débit sont constituées par des données comprenant une erreur sur un mot de verrouillage de trame, une erreur sur un mot de surveillance d'erreur d'une section élémentaire régénérée et/ou une erreur sur un mot de surveillance d'erreur d'une section de multiplexage du signal numérique de données à haut débit.

D'autres caractéristiques et avantages ressortiront de la description suivante, donnée à titre d'exemple, en regard des dessins annexés sur lesquels :
- la figure 1 représente un schéma synoptique d'un générateur de signaux numériques de données à haut débit d'un appareil de mesure de conduits de transmission numérique à haut débit selon l'art antérieur ;
- la figure 2 représente un schéma synoptique d'un récepteur de signaux numériques de données à haut débit d'un appareil de mesure de conduits de transmission numérique à haut débit selon l'art antérieur ;
- la figure 3 est un schéma illustrant la structure de l'entête de section d'un signal numérique de données à bas débit ;
- la figure 4 est un schéma illustrant la structure de l'entête de section d'un signal numérique de données à haut débit ;
- la figure 5 est un schéma synoptique illustrant un générateur de signaux numériques de données à haut débit selon l'invention ;
- la figure 6 est un schéma synoptique d'un générateur de signaux numériques de données à bas débit selon l'invention ;
- la figure 7 est un schéma synoptique illustrant un mode de réalisation particulier du générateur de la figure 5 ; et
- la figure 8 est un schéma synoptique d'un mode de réalisation particulier du générateur de la figure 6.

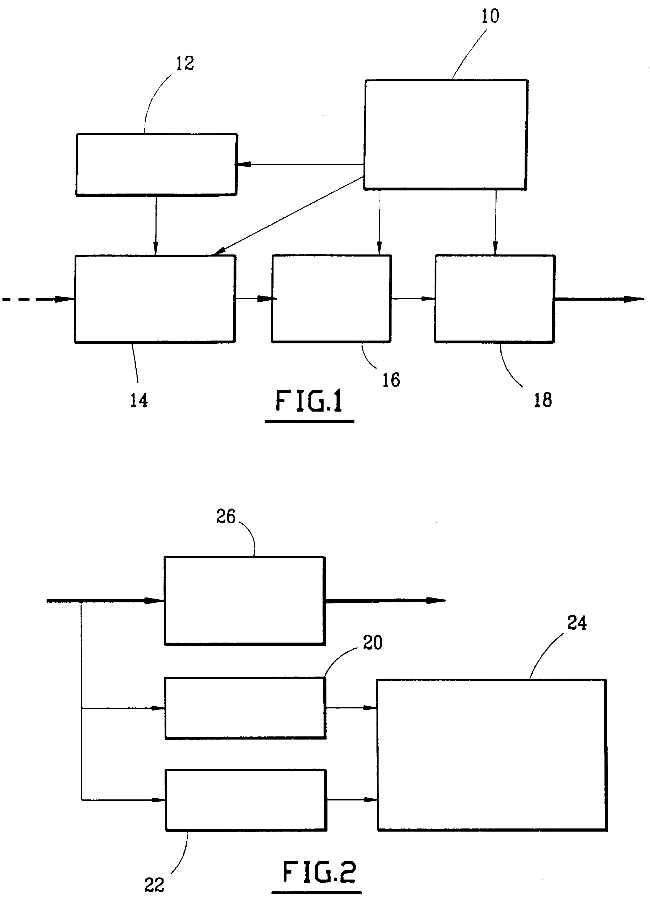

En se référant aux figures 1 et 2, un appareil de mesure de conduits de transmission numérique à haut débit comporte un générateur de signaux numériques à haut débit, schématiquement représenté sur la figure 1, et un récepteur de signaux numériques de données à haut débit, schématiquement représenté sur la figure 2.

Le générateur de signaux numériques de données à haut débit comporte un module 10 de contrôle relié à un générateur de rythme 12, à un générateur de signaux numériques à haut débit 14 proprement dit, à un module d'injection d'alarmes 16 et à un module d'injection d'erreurs 18.

Le module de contrôle 10 assure l'interface homme/machine.

Le générateur de rythme 12 engendre, à partir de consignes fournies par un opérateur, le rythme du signal numérique de données à haut débit à transmettre dans le conduit de transmission numérique. Le générateur de signaux numériques à haut débit utilise le rythme engendré par le générateur de rythme 12 pour générer le contenu binaire du signal numérique à haut débit auquel peuvent être ajoutées des données issues d'un signal numérique incident, représenté en pointillés sur cette figure.

Le signal délivré par le générateur de signaux numériques à haut débit 14 est ensuite successivement présenté en entrée du module d'injection d'alarmes 16 et du module d'injection d'erreurs 18 afin de modifier chacune des caractéristiques du signal numérique à haut débit engendré.

Le signal numérique ainsi délivré est ensuite transmis dans le conduit de transmission numérique puis analysé en sortie par le récepteur de signaux numériques de données à haut débit représenté sur la figure 2.

Le récepteur de signaux numériques de données à haut débit comporte un bloc de détection des alarmes 20 afférentes au signal numérique à haut débit, tel que la perte de signal, la perte de trame, la sortie de synchronisation de trame..., et un bloc de détection des erreurs 22, calculant par exemple la parité du signal incident. Les signaux d'alarme et d'erreur sont ensuite transmis à un module de traitement 24 en vue de leur comptage et de leur visualisation.

En outre, le récepteur comporte un module d'extraction d'un affluent à bas débit 26 fournissant un signal valide quel que soit le signal haut débit en émettant par exemple un signal d'indication d'alarme si le signal à haut débit est en perte de trame.

Comme cela a été mentionné précédemment, les générateurs de signaux numériques de données à haut débit et les récepteurs de signaux numériques de données à haut débit connus à ce jour ne peuvent pas assurer un transfert complet des caractéristiques entre des signaux numériques de données à haut débit et à bas débit.

Pour pallier ces inconvénients, et selon l'invention, on associe de façon interne ou externe à un appareil de mesure de conduits de transmission numérique, un dispositif de transfert d'informations entre deux signaux numériques véhiculés par au moins un module de transmission de signaux assurant un transfert des caractéristiques d'un signal incident vers un signal de sortie selon différents modes de transfert, de manière à assurer un transfert sans altération de toutes les caractéristiques devant être modifiées ou mesurées.

Par le terme "caractéristiques" on entend un ensemble de données, en particulier un ensemble d'octets du signal considéré associés à une fonction particulière telle que la fonction d'alarme, d'erreur,...

Le dispositif de transfert comporte en outre une fonction assurant une conversion de débit permettant d'utiliser un appareil de mesure à bas débit pour la mesure de conduits de transmission numérique à haut débit.

Ainsi, un appareil de mesure fonctionnant à bas débit associé à un tel dispositif de transfert peut être utilisé pour mesurer des conduits de transmission à haut débit, la mesure de caractéristiques du signal sortant fournissant dès lors le même résultat que la mesure de ces mêmes caractéristiques sur le signal entrant.

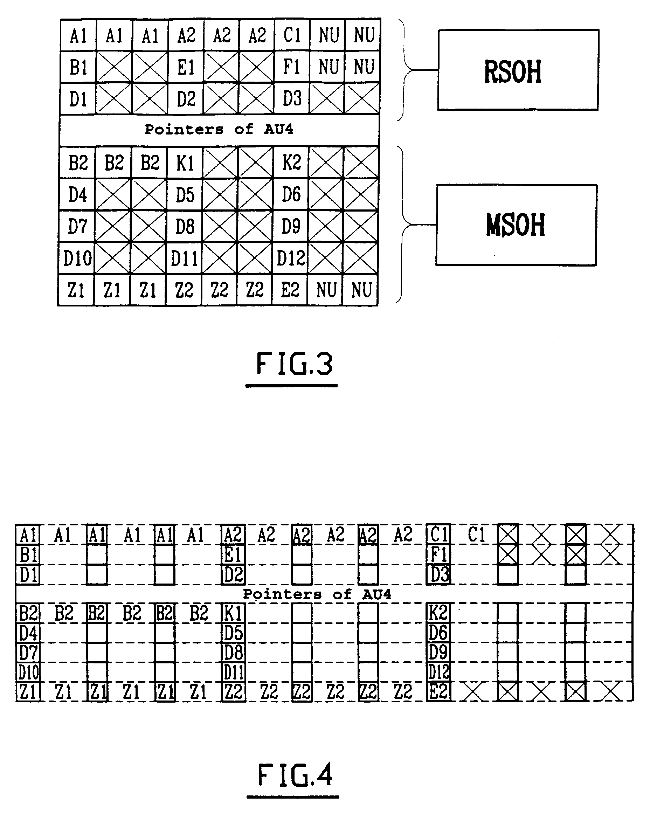

Un dispositif de transfert d'informations entre un signal numérique de données à haut débit et un signal numérique de données à bas débit, véhiculés respectivement par un conduit numérique connu sous la désignation STM16 fonctionnant environ à 2488 mégabits par secondes et un conduit STM1 fonctionnant environ à 155 mégabits par secondes va maintenant être faite en référence aux figures 3 à 8.

Un signal véhiculé par un conduit numérique de type STM est un signal tramé, dont la trame transmet les caractéristiques suivantes :
- **AIS**: : Signal d'indication d'alarme (SIA)
- **APS**: : Commutation automatique sur liaison de réserve
- **AU**: : Unité administrative
- **AUG**: : Groupe d'unité administrative
- **AU-Path AIS**: : SIA du chemin d'unité administrative
- **BER**: : Taux d'erreur binaire
- **BIP-n**: : Parité d'entrelacement de bits-n
- **Ci**: : Indication de concaténation
- **C-m**: : Conteneur - m
- **DCC**: : Voie de communication de données
- **EBER**: : Taux d'erreurs excessif
- **ECC**: : Voie de communication intégrée
- **EFD**: : Etat de Fonctionnement Dégradé
- **EFI**: : Etat de Fonctionnement Intolérable
- **EFN**: : Etat de Fonctionnement Normal
- **FEBE**: : Erreur de bloc à l'extrémité distante
- **FERF**: : Défaut en réception à l'extrémité distante
- **HOP**: : Conduit d'ordre supérieur
- **HO-Path FERF**: : Indication de défaut distant du conduit d'ordre supérieur chemin
- **HPA**: : Adaptation de conduit d'ordre supérieur
- **HPC**: : Connexion de conduit d'ordre supérieur
- **HPT**: : Terminaison de conduit d'ordre supérieur
- **IdE**: : Indication d'Environnement
- **IdF**: : Indication de Faute
- **LPA**: : Adaptation de conduit d'ordre inférieur
- **LOF**: : Perte de trame
- **LOP**: : Perte de pointeur
- **LOS**: : Perte de signal
- **MCF**: : Fonction de communication de message
- **MS-AIS**: : SIA de section de multiplexage
- **MS-FERF**: : Défaut distant de section de multiplexage
- **MSOH**: : Surdébit de section de multiplexage
- **NDF**: : Drapeau de nouvelles données
- **NOMC**: : Regroupe les octets E1,E2,F1, et D1-D12
- **NU**: : Octet de surdébit pour une utilisation nationale
- **OFS**: : Seconde avec perte de trame
- **OOF**: : Désynchronisation trame
- **PJC**: : Nombre de justifications de pointeur
- **PJE**: : Evénement de justification de pointeur
- **POH**: : Surdébit de conduit
- **PSC**: : Nombre de commutation sur canal de secours
- **RAI**: : Indication d'alarme distante
- **RD**: : Réception dégradée
- **RSOH**: : Surdébit de section de régénération
- **SAE**: : Seconde Avec Erreur
- **SD**: : Signal Dégradé
- **SF**: : Signal coupé
- **SGE**: : Seconde Gravement Erronée
- **SOH**: : Surdébit de section
- **TD**: : Emission dégradée
- **TF**: : Emission défaillante
- **TS**: : Génération de rythme
- **VC-m**: : Conteneur virtuel-m

La trame d'un signal véhiculé par un conduit numérique de type STM présente une période de 125 microsecondes et est composée d'une capacité ou signal utile, obtenue par multiplexage de plusieurs AUG, et d'un SOH.

On voit sur la figure 3 que le SOH d'un signal à bas débit circulant sur un conduit numérique de type STM1 est constitué de neuf lignes de neuf colonnes d'octets, les lignes 1 à 3 formant le surdébit de section de régénération (RSOH), la ligne 4 comportant les pointeurs d'AU4 et les lignes 5 à 9 formant le surdébit de section de multiplexage (MSOH). Le RSOH véhicule notamment des octets A1 et A2 constituant un mot de verrouillage de trame et un octet B1 constituant un mot de surveillance d'erreur de parité du RSOH de la trame du signal à bas débit.

En se référant à la figure 4, on voit que le SOH d'un signal à haut débit véhiculé par un conduit numérique de type STM16 comporte neuf lignes de 144 colonnes d'octets véhiculant notamment 48 octets A1, 48 octets A2, un octet B1 et 48 octets B2 constituant un mot de surveillance d'erreur de parité du MSOH calculé sur tous les octets d'une trame précédente, à l'exception des octets du RSOH.

Sur les figures 3 et 4 les octets non utilisés sont désignés par une croix.

Par ailleurs, L'AUG d'un signal à bas débit et l'AUG d'un signal à haut débit véhiculent des octets B3 et V5 constituant respectivement un mot de surveillance d'erreur sur un conduit d'ordre supérieur et un mot de surveillance d'erreur sur un conduit d'ordre inférieur.

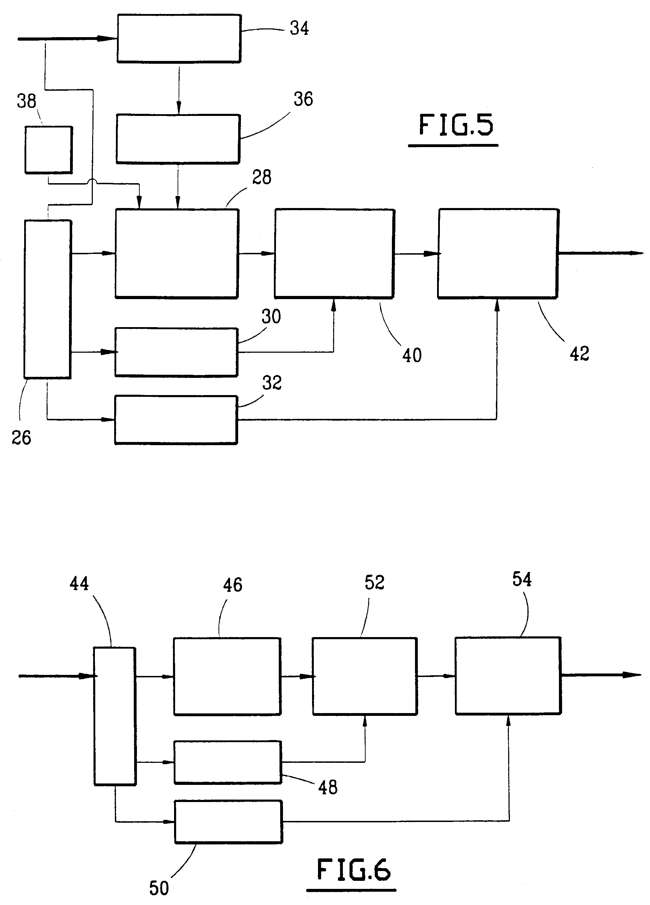

Un dispositif de transmission d'informations d'un appareil de mesure de conduits numériques va maintenant être décrit en référence aux figures 5 et 6.

Ce dispositif comporte une partie émission, constituée par un générateur de signaux numériques haut débit et une partie réception, constituée par un générateur de signaux numériques bas débit.

On voit sur la figure 5 que le générateur de signaux numériques à haut débit comporte des moyens de sélections de caractéristiques du signal d'entrée constitués par des moyens de décodage 26 des données du signal numérique à bas débit présent en entrée du générateur, alimentant un module de génération de signaux numériques à haut débit 28, et des moyens de mesure comportant un module de détection d'alarmes 30 et un module de détection d'erreurs 32.

Par ailleurs, le générateur de signaux numériques à haut débit comporte un module d'extraction du rythme du signal d'entrée 34 relié à un module de multiplication de fréquence 36 délivrant au module de génération de signaux numériques à haut débit 28 un signal électrique périodique de fréquence égale au rythme du signal à haut débit, désigné généralement par le terme "Horloge Emission Haut Débit".

En outre, le module de génération de signaux numériques à haut débit 28 est relié à une mémoire de données binaires 38.

Par ailleurs, le générateur de signaux numériques à haut débit 28 comporte des moyens de modification du signal à haut débit comprenant un module d'injection d'alarmes 40 disposé en sortie du module de génération de signaux numériques à haut débit 28 et alimenté par le module de détection d'alarmes 30 et un module d'injection d'erreurs 42 disposé en sortie du module d'injection d'alarmes 40 et alimenté par le module de détection d'erreurs 32.

Les moyens de sélection 26 sont constitués par un module de discrimination assurant un repérage dans le signal d'entrée des différentes données à traiter et prélèvent sur ce signal d'entrée un premier ensemble d'octets et les fournit, associés à leur séquencement au module de génération de signaux numériques à haut débit 28 en vue de leur transfert direct et de leur positionnement dans le signal numérique à haut débit de sortie de telle sorte que les caractéristiques véhiculées par ce premier ensemble d'octets varient de façon identique dans le signal d'entrée et dans le signal de sortie.

Par ailleurs, le module de détection d'alarmes 30 et le module de détection d'erreurs 32 assurent la mesure de caractéristiques véhiculant un deuxième ensemble d'octets, prélevés sur le signal d'entrée par le module de discrimination, et transmettent les données résultant de la mesure au module d'injection d'alarmes 40 et au module d'injection d'erreurs 42 en vue de leur transfert et de leur positionnement dans le signal numérique à haut débit engendré par le module de génération de signaux numériques à haut débit 28.

En particulier, le module de détection d'alarmes 30 assure une détection des alarmes selon le critère défini dans la norme internationale désignée par la référence UIT suivie du secteur de la normalisation des télécommunications. Le résultat de cette détection est un ensemble de signaux électriques véhiculant chacun à la fois la présence d'une alarme et sa durée.

Par ailleurs, le module de détection d'erreurs 32 détecte l'occurrence d'une erreur de chaque type, à savoir, l'erreur sur les parités B1,B2 et M1, et l'erreur sur le mot de verrouillage de trame par détection d'erreurs sur les octets A1 et A2, par simple échantillonnage pour la donnée M1, par calcul de parité et comparaison après échantillonnage d'un octet pour les données B1 et B2 et par une comparaison après échantillonnage pour les données A1,A2.

Le signal de sortie du module de détection d'erreurs 32 est un ensemble de signaux, à raison de un signal par type d'erreur, véhiculant une impulsion ou une indication de nombres dès qu'une ou plusieurs erreurs est détectée.

Le module d'injection d'alarmes 40 modifie alors le signal haut débit engendré par le module de générations de signaux numériques à haut débit 28 pendant la durée d'activité du signal délivré par le module de détection d'alarmes 30, selon le type de chaque alarme.

En particulier, la détection d'une alarme de type LOS sur le signal entrant coupe l'émission du signal de sortie aussi longtemps que cette alarme persiste.

Il est à noter que le signal délivré par le module d'injection d'alarmes 40 est un signal numérique à haut débit ayant les mêmes caractéristiques d'alarmes que le signal bas débit d'entrée.

De façon similaire, le module d'injection d'erreurs 42 modifie le signal haut débit délivré par le module d'injection d'erreurs 40 à l'endroit qui permettra la détection d'une erreur à chaque impulsion d'erreur reçue.

Par conséquent, le signal délivré par le module d'injection d'erreurs 42 constituant le signal numérique de données à haut débit délivré par le générateur de signaux numériques à haut débit, présente les mêmes caractéristiques d'erreur et d'alarme que le signal à bas débit entrant.

Comme cela a été mentionné précédemment, le module de génération de signaux numériques à haut débit 28 engendre un signal numérique à haut débit ayant un rythme multiple du signal d'entrée à bas débit.

Ce signal est généré à partir du module d'extraction du rythme 34 du signal entrant et du module de multiplication de fréquence 36. Le module 34 d'extraction du rythme est par exemple constitué par un filtre à onde de surface délivrant un signal périodique, dont la période est égale à la période du signal d'entrée ou égale à un multiple de cette période.

Le module de multiplication de fréquence 36 comporte une boucle à verrouillage de phase opérant sur un circuit oscillant à la fréquence du signal à haut débit à délivrer et fournit un signal électrique périodique de fréquence égale au rythme de l'horloge émission haut débit, c'est-à-dire 2488,320 Mhz.

Ainsi, la caractéristique de déviation relative de la fréquence est identique sur le signal à haut débit et sur le signal à bas débit.

Enfin, afin d'assurer la constitution d'une trame entière, les octets du signal numérique à haut débit, non remplis par les octets du signal numérique à bas débit, reçoivent des données binaires mémorisées dans les moyens de mémorisation 38 sous la commande de l'organe de discrimination 26.

Il est à noter que les données présentes dans le signal numérique à bas débit d'entrée sont transférées vers le signal numérique à haut débit de sortie par homothétie, par transfert implicite et par transfert explicite.

L'homothétie correspond ici à une multiplication de la fréquence du signal d'entrée par 16.

Le transfert implicite correspond à un transfert direct de données du signal d'entrée vers le signal de sortie. Par exemple, les octets du SOH sont prélevés dans le signal d'entrée pour former les colonnes 1,17,33,49, 65,81,97,113 et 129 du SOH du signal du STM16, les autres octets du SOH du STM16 étant remplis par les données prélevées des moyens de mémorisation 38.

Le transfert explicite correspond à une mesure de caractéristiques du signal d'entrée et à une réinjection de la valeur de mesure dans le signal de sortie.

La figure 6 représente le générateur de signaux numériques à bas débit du dispositif de mesure de conduits numériques.

Ce générateur est destiné à engendrer un signal de type STM1 à partir d'un signal véhiculé de type STM16 en transférant toutes les caractéristiques de transmission du STM16 vers le STM1.

On voit sur cette figure que le générateur comporte des moyens de sélection des caractéristiques véhiculées par le STM16 constituées par des moyens de décodage 44 des données du signal d'entrée, alimentant un module de génération de signaux numériques à bas débit 46, et des moyens de mesure comprenant un module de détection d'alarmes 48 et un module de détection d'erreurs 50.

Les moyens de décodage 44 sont constitués par un module de discrimination assurant un repérage dans le signal d'entrée des différentes données à traiter.

Le module de discrimination 44 prélève sur le signal d'entrée un premier ensemble d'octets et les fournit au module de génération de signaux numériques à bas débit 46 en vue de leur transfert implicite vers le signal numérique à bas débit de sortie par transfert direct et positionnement dans ce signal numérique de telle sorte que les caractéristiques véhiculées par ce premier ensemble d'octets varient de façon identique dans le signal d'entrée et dans le signal de sortie.

Par ailleurs, le module de discrimination 44 assure une sélection d'un deuxième ensemble de données du signal d'entrée, constituées par les alarmes et les erreurs de ce signal d'entrée, et les fournit au module de détection d'alarmes 48 et au module de détection d'erreurs 50 en vue de leur transfert explicite dans le signal généré par le module de génération de signaux numériques à bas débit 46 par modification du signal numérique à bas débit au moyen d'un module d'injection d'alarmes 52 et d'un module d'injection d'erreurs 54, reliés respectivement au module de détection d'alarmes 48 et au module de détection d'erreurs 50.

Ainsi, toutes les informations relatives au signal numérique d'entrée véhiculées par le STM16 se retrouvent dans un signal numérique de sortie véhiculé par un STM1.

Le fonctionnement de ce générateur de signaux numériques à bas débit est le suivant.

Le discriminateur 44 prélève sur le signal à haut débit les éléments qui doivent être transférés directement, c'est-à-dire par transfert implicite, et les fournit au module de génération de signaux numériques à bas débit 46.

Ces éléments sont prélevés dans la quantité permettant d'assurer le rapport entier des débits, mais ne sont pas nécessairement prélevés de façon régulière. Il peut être intéressant de les prélever en optimisant leur transfert implicite.

En particulier, le SOH du signal de sortie sera constitué des colonnes 1,17,33,49,65,81,97,113,129 du STM16 et l'AU4 de ce signal de sortie sera constitué des colonnes du STM16 formant l'un des seize AU4 du signal d'entrée.

Le module de génération de signaux numériques à bas débit 46 forme à partir des éléments provenant du module de discrimination 44 un affluent à bas débit de rythme divisé selon un rapport déterminé et dont la structure est conforme aux recommandations de l'UIT-T. Ceci comprend en particulier le recalcul de tous les octets de parité qui ne sont plus corrects après leur transfert.

Le module de détection d'alarmes 48 détecte l'occurrence des alarmes selon le critère défini dans la norme. Ce module 48 engendre un ensemble de signaux électriques véhiculant chacun à la fois la présence d'une alarme et sa durée.

Le module de détection d'erreurs 50 détecte l'occurrence d'une erreur de chacun des types, tels que l'erreur sur la parité M1, sur le mot de verrouillage de trame par détection d'erreurs sur les octets A1 et A2 et sur les parités B1 et B2, respectivement par un simple échantillonnage, par un calcul de parité et comparaison après échantillonnage et par comparaison après échantillonnage.

Le résultat de ce traitement est un ensemble de signaux, un par type d'erreur, véhiculant une impulsion ou une indication de nombre d'erreurs dès qu'une ou plusieurs erreurs est détectée.

Le module d'injection d'alarmes 52 modifie le signal bas débit délivré par le module de génération de signal bas débit 46 pendant la durée d'activité du signal de commande délivré par le module de détection d'alarmes 48, selon le type de chaque alarme.

Ainsi, la détection d'une alarme LOS sur le signal entrant coupera-t-elle l'émission du signal sortant aussi longtemps que cette alarme persiste.

Il est à noter que le module d'injection d'alarmes 52 engendre un signal bas débit ayant les mêmes caractéristiques d'alarme que le signal haut débit d'entrée.

Le module d'injection d'erreurs 54 modifie le signal bas débit délivré par le module d'injection d'alarmes 52 à un emplacement qui permettra la détection d'une erreur à chaque impulsion d'erreur reçue.

Il est également à noter que ce module d'injection d'erreurs 54 délivre un signal bas débit ayant les mêmes caractéristiques d'erreur et d'alarme que le signal à haut débit d'entrée.

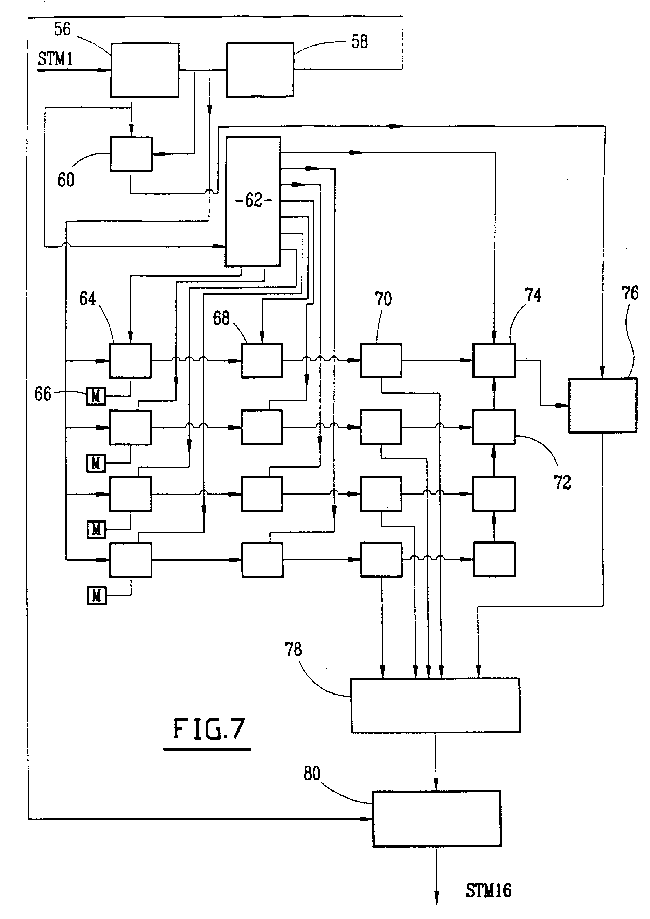

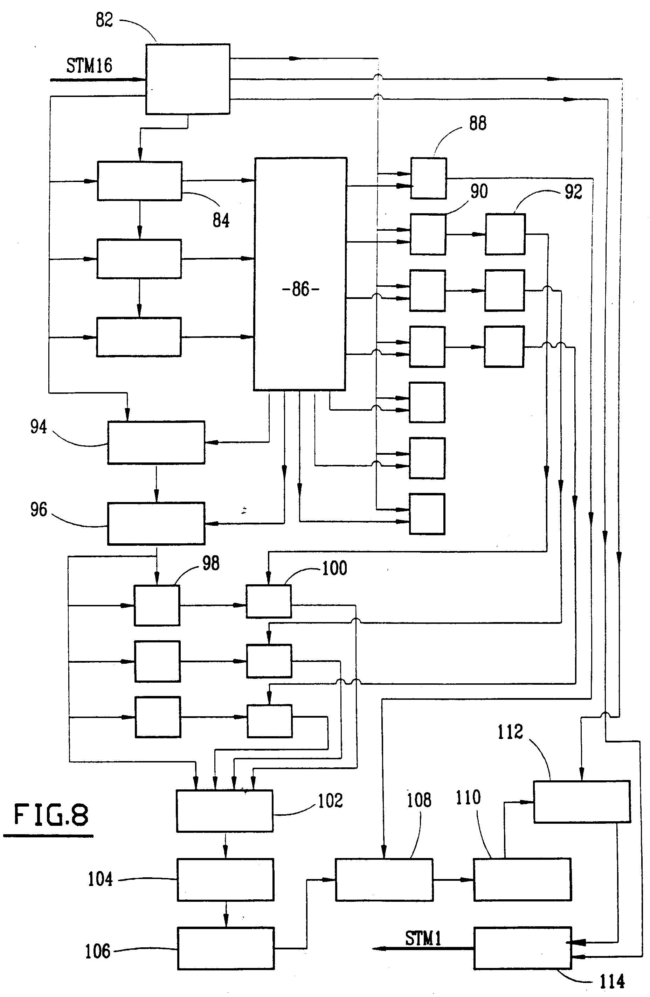

Un mode de réalisation particulier d'un dispositif de mesure du conduit de transmission numérique STM16 va maintenant être décrit en référence aux figures 7 et 8.

Le dispositif de mesure comporte une partie émission comportant un générateur de signaux numériques à haut débit, représenté sur la figure 7 et une partie réception comportant un générateur de signaux numériques à bas débit représenté sur la figure 8.

En référence à la figure 7, le générateur de signaux numériques à haut débit comporte un module d'extraction de rythme 56 recevant le signal d'entrée véhiculé par un STM1 et alimentant un module de synthèse de fréquence 58 et un module de calcul 60.

Le module d'extraction de rythme 56 assure un décodage de type CMI du signal d'entrée, la récupération du rythme, la détection du mot de verrouillage de trame et la synchronisation du générateur sur la trame d'entrée en fournissant une impulsion de synchronisation de trame alimentant le module de calcul 60.

Le module d'extraction de rythme 56 assure en outre la mise en parallèle sous forme d'octets du signal d'entrée alimentant le module 58 de synthèse de fréquence et la fourniture d'une horloge synchrone des octets alimentant le module de calcul 60.

Ce module peut être réalisé par des composants logiques discrets en technologie ECL, des convertisseurs ECL/CMOS, ou un module de récupération de rythme basés sur un filtre à onde de surface.

Le module de calcul 60 assure la détection des erreurs B1 sur le signal d'entrée sous forme d'octets. Cette détection est réalisée conformément à la recommandation UIT-T-G709. Ce module délivre une information d'erreur sous forme de un ou de huit signaux prenant la valeur "1" pendant une trame si une erreur est détectée respectivement sur un octet correspondant ou l'un des huit bits de l'octet.

Ce bloc peut être réalisé par un ASIC, un FPGA, ou être intégré dans l'un de ces deux types de composants.

Le module de synthèse de fréquence 58 assure la production d'une horloge à 2488,320 MHz, en synchronisme avec l'horloge issue du signal du STM1. Il est réalisé à l'aide d'un VCxO et d'une boucle à verrouillage de phase.

Par ailleurs, le signal d'impulsion de synchronisation de trame délivré par le module d'extraction de rythme 56 et le signal d'horloge délivré par le module de synthèse de fréquence 58 alimentent des moyens de sélection constitués par un séquenceur 62 destiné à engendrer des signaux permettant de repérer dans la trame du signal du STM16 les différents signaux à traiter.

Le séquenceur 62 est constitué d'un ensemble de compteurs synchronisés par l'impulsion de synchronisation de trame de telle sorte que la trame du signal du STM16 formée est en phase avec la trame du signal d'entrée.

Les compteurs divisent l'horloge du signal incident jusqu'à obtenir une périodicité de une trame. Tout élément binaire de la trame peut alors être repéré par un simple décodage de la valeur du compteur à l'aide d'éléments logiques.

En raison de la valeur élevée de la fréquence de signal du STM16, les traitements ne se font pas en série à 2488,320 MHz, mais sur des blocs du signal permettant un traitement à une fréquence moindre et l'utilisation de composants de technologie CMOS. Sur cette figure 7, le traitement est réalisé sur 32 bits.

Le séquenceur 62 assure donc une première division par 32, puis par 4,9,30 et 9 pour obtenir une période de 125 microsecondes.

Il décode les signaux suivants :
TOP B1 : position de l'octet B1 sur la trame du signal du STM16 ;
Env B1 : ensemble des octets utilisés pour le calcul de la parité B1 ;
TOP B2 n°j : position de l'octet B2 n°j sur la trame du signal du STM16 ;
Env B2 n°j : enveloppe des octets utilisés pour le calcul de la parité B2 n°j.

Parmi les 48 couples de signaux TOP B2, Env B2, trois couples de signaux TOP B1 ou TOP B2, Env B1 ou Env B2 restent inactifs. Ce sont ceux qui sont afférents aux colonnes de l'AU4 sélectionné. Si l'AU4 sélectionné est le numéro N, les trois couples pourront prendre les valeurs de j suivantes : N,N+16,N+32. Ceci permettra au module aval de ne pas réinjecter le contenu de l'octet B2, mais de transférer celui du signal du STM1 d'entrée et donc de laisser une éventuelle erreur se propager.

Le séquenceur 62 délivre en outre un ensemble de signaux de sélection de données, désignés par la suite par signaux de sélection STM/MEMOIRE alimentant un ensemble de modules de multiplexage, tel que 64, reliés chacun à une mémoire, telle que 66, en vue d'assurer sélectivement le transfert vers le signal de sortie d'une part de données issues du signal numérique d'entrée, et d'autre part de données stockées dans les mémoires.

En particulier, le décodeur 62 délivre les signaux de sélection STM/MEMOIRE suivants :
Signal de sélection STM1/MEMOIRE N°1 : ce signal est à 1 lorsqu'un octet doit prendre une valeur issue du signal d'entrée et à 0 lorsqu'il prend une valeur mémorisée.

Il est à 1 :
- sur les colonnes 1,17,33,49,65,81,97,113, 129 du SOH du STM1 sauf si l'AU4 sélectionné est le n° 1,
- sur les lignes 4,5,6,7,8,9 et les colonnes N,N+16,N+32,N+48,N+64,N+80,N+96,N+112,N+128 du SOH si l'AU4 sélectionné est le numéro N, pour N égal à 1,5, 9,13,
- sur les colonnes N+16 x K du signal utile du signal d'entrée, K prenant des valeurs comprises entre 9 et 269 et N était égal à 1,5,9,13.

Signal de sélection STM1/MEMOIRE N°2 : ce signal est à 1 lorsqu'un octet doit prendre une valeur issue du signal d'entrée et à 0 lorsqu'il prend une valeur mémorisée.

Il est à 1 :
- sur les lignes 4,5,6,7,8 et les colonnes N,N+16,N+32,N+48,N+64,N+80,N+96,N+112,N+128 si l'AU4 sélectionné est le numéro N, pour N est égal à 2,6,10,14,
- sur les colonnes N+16 x K, étant K prenant des valeurs comprises entre 9 et 269 et N étant égal à 2,6, 10,14.

Signal de sélection STM1/MEMOIRE N° 3 : ce signal est à 1 lorsqu'un octet doit prendre une valeur issue du signal d'entrée et à 0 lorsqu'il prend une valeur mémorisée.

Il est à 1 :
- sur les lignes 4,5,6,7,8,9 et les colonnes N,N+16,N+32,N+48,N+64,N+80,N+96,N+112,N+118, si l'AU4 sélectionné est le numéro N, pour N est égal à 3,7,11,15,
- sur les colonnes N+16 x K, K prenant des valeurs comprises entre 9 et 269 et N étant égal 3,7, 11,15.

Signal de sélection STM1/MEMOIRE N°4 : ce signal est à 1 lorsqu'un octet doit prendre une valeur issue du signal d'entrée et à 0 lorsqu'il prend une valcur mémorisée.

Il est à 1 :
- sur les lignes 4,5,6,7,8,9 et les colonnes N,N+16,N+32,N+48,N+64,N+80,N+96,N+112,N+118, si l'AU4 sélectionné est le numéro N, pour N égal à 4,8,12,16,
- sur les colonnes N+16 x K, K prenant des valeurs comprises entre 9 et 269 et N étant égal 4,8, 12,16.

Le séquenceur 62 est réalisé par un ASIC ou un FPGA ou être intégré dans l'un de ces deux types de composants.

Le signal délivré par chacun des modules de multiplexage 64 alimente chacun un module de calcul et d'insertion d'octet B2, tels que 68, assurant le calcul des octets B2 conformément à la recommandation IUT G709. Lorsqu'un signal TOP B2 est au repos, les données entrant sont transférées sans modification vers la sortie.

Chaque module de calcul 68 peut être réalisé par un ASIC, un FPGA ou être intégré dans l'un de ces deux types de composants.

Chacun des signaux délivrés par les modules de calcul 68 est ensuite embrouillé conformément à la recommandation UIT-T-G709 au moyen d'un ensemble de modules d'embrouillage, tel que 70, puis alimente respectivement trois modules de calcul de contribution à la parité B1, tels que 72, et un module de calcul et d'insertion de d'octets B1 74.

Chacun des modules de calcul de contribution à la parité B1 72 calcule la parité de tous les octets traités par ces modules et comptant pour le calcul de la parité B1. Il les ajoute à la parité transmise par le module en amont et transmet le résultat au module aval.

Le module 74 de calcul et d'insertion d'octets B1 74 calcule la parité de tous les octets traités par ce module et comptant pour le calcul B1. Il les ajoute à la parité transmise par le module amont et insère le résultat sur le signal aval à la place indiquée par le signal TOP B1. Ce module peut être réalisé par un ASIC, un FPGA ou être intégré dans l'un de ces deux types de composants.

Dans le signal délivré par le module de calcul et d'insertion d'octets B1 74 est insérée l'erreur B1 délivrée par le module de calcul 60 au moyen d'un module d'insertion d'erreurs B1 76.

Ce module d'insertion d'erreurs B1 76 modifie l'octet B1 précédemment calculé en multipliant cet octet d'erreur B1 par un OU exclusif à l'instant défini par le signal TOP B1. Ce bloc peut être réalisé par un ASIC, un FPGA ou être intégré dans l'un de ces deux types de composants.

Les signaux délivrés par chacun des modules d'embrouillage 70 et par le module d'insertion d'erreurs B1 76 sont ensuite multiplexés par un module de multiplexage 78 puis mis en série avec l'horloge du signal du STM16 délivrée par le module de synthèse de fréquence 58 au moyen d'un module de sérialisation 80 comportant un composant logique de sérialisation et un émetteur à diode laser associé de façon connue à des circuits de commande et de régulation.

Le module de sérialisation 80 assure la mise en série des octets présents au niveau de ses entrée et le cas échéant la conversion électrique/optique du signal. En outre, lorsque le signal de perte de signal est actif, il coupe l'émission du signal délivré par le STM16.

La partie réception du dispositif de transmission d'informations de l'appareil de mesure du conduit numérique à haut débit va maintenant être décrite en référence à la figure 8.

Comme pour la partie émission, la partie réception comporte un premier module d'extraction de rythme 82 assurant la réception du signal d'entrée et le cas échéant la transformation du signal en un signal électrique et fournit un signal LOS indiquant l'absence de signal entrant. Il récupère le rythme du signal d'entrée, se synchronise sur la trame, détecte les erreurs sur les octets A1 et A2, assure une mise en parallèle du signal d'entrée sur 32 bits ainsi que la division de l'horloge du signal d'entrée par 8 et 32.

L'impulsion de synchronisation de trame et le signal d'horloge divisé par 32 sont présentés en entrée de trois compteurs, tels que 84, respectivement par 36,30 et 9 pour obtenir une période de 125 microsecondes. Chacun des compteurs 84 alimente un module de sélection de données 86 assurant comme pour la partie émission le décodage des signaux TOP B1, Env B1, TOP B2 n°j et Env B2 n°j ainsi que de signaux SELECT et SAMPLE qui définissent l'octet du signal du STM16 entrant à transférer vers le signal de sortie. Quand SAMPLE est à 1, un octet est à transférer, le numéro de cet octet étant codé sur deux bits à l'aide des signaux SELECT.

Pour assurer les transferts implicites des données du signal d'entrée, SAMPLE et SELECT désignent:
sur le SOH du signal d'entrée : les colonnes 1,17,33,49,65,81,97,113,129 hormis la ligne 4, sauf si la ligne 4 sélectionnée est le numéro 1,
sur la ligne de pointeurs d'AU : les colonnes N,N+16,N+32,N+48,N+64,N+80,N+96,N+112,N+118, si l'AU4 sélectionné est le numéro N, et
sur la charge utile : les colonnes N+16 x K, K prenant des valeurs comprises entre 9 et 269.

Les signaux TOP B1 et Env B1 délivrés par le module de sélection de données 86 ainsi que le signal d'entrée codé sur 32 bits par le module d'extraction de rythme 82 sont délivrés à un module de calcul de parité B1 88 assurant le calcul de la parité de tous les octets du signal d'entrée comptant pour le calcul de la parité B1. Pour ce faire, il utilise le signal Env B1 qui marque ces octets. Il échantillonne en outre l'octet B1 de la trame suivante et fournit en sortie un signal de comparaison entre l'octet échantillonné et le résultat du calcul de parité, valide pendant la durée d'une trame.

Par ailleurs, le signal d'entrée codé sur 32 bits et les signaux TOP B2 et Env B2 délivrés par le module de sélection de données 86 sont fournis à un ensemble de modules de calcul de parité B2 90.

Chacun des modules de calcul de parité B2 90 assure la détection des erreurs B2 par calcul de la parité B2 sur les colonnes du signal d'entrée. On conçoit que pour un octet B2 n°j, le signal d'enveloppe Env B2 n°j spécifie les octets entrant dans le calcul, le signal TOP B2 n°j spécifiant l'octet qui est échantillonné.

Le signal de sortie de chacun de ces modules est un signal sous forme d'octets ayant la valeur "1" pendant une trame sur le bit erroné.

Comme pour la partie émission, le calcul est réalisé conformément à la recommandation UIT-T-G709. Les signaux de sortie des modules de calcul de parité B2 90 sont ensuite additionnés au moyen d'additionneurs tels que 92 assurant un OU entre les octets d'erreur issus des différents modules de calcul 90 et fournissant un signal sous forme d'octets ayant une valeur 1 pendant une trame sur un bit, si au moins un des seize bits entrant est à 1.

Par ailleurs, le signal d'entrée codé sur 32 bits est fourni à un module d'échantillonnage 94 et à un module de sélection d'octets 96, assurant au moyen des signaux SAMPLE et SELECT une sélection d'un octet parmi seize octets consécutifs du signal d'entrée présenté par mot de 32 bits successifs, l'octet sélectionné étant en outre resynchronisé sur le rythme du signal de sortie.

Le signal de sortie de chacun de ces modules 94 et 96 d'échantillonnage et de sélection des octets est délivré à des modules de calcul de parité B2, tels que 98, qui délivrent chacun un signal de calcul de parité B2 sur le signal du STM1 ainsi reformé, à un module d'insertion d'erreurs B2 100 correspondant.

Chaque module d'insertion d'erreurs B2 100 est en outre relié à un module de calcul de parité B2 90 correspondant et réalise un OU exclusif entre l'octet de parité B2 calculé et l'octet d'erreur B2 transmis.

Le signal délivré par les modules d'échantillonnage et de sélection 94 et 96 ainsi que les signaux délivrés par les modules d'insertion d'erreurs B2 100 sont délivrés à un modules de multiplexage 102 qui positionne les octets B2 éventuellement erronés sur le signal du STM1.

Le signal de sortie de ce multiplexeur 102 est ensuite embrouillé au moyen d'un module d'embrouillage 104 puis présenté en entrée d'un module de calcul de parité B1 106 qui réalise, de façon identique à la partie émission du dispositif de mesure, le calcul de l'octet de parité B1 sur le signal du STM1 reformé.

Un module d'insertion d'erreurs B1 108 réalise ensuite un OU exclusif entre l'octet de parité calculé par le module de calcul de parité B1 106 et l'octet d'erreur B1 provenant du signal d'entrée transmis par le module de calcul d'erreurs B1 88.

L'octet B1 éventuellement erroné est positionné sur le signal du STM1 au moyen d'un module de multiplexage d'octet B1 110 puis un module d'insertion d'erreurs A1A2 112 réalise un OU exclusif entre le dernier bit du troisième A1 délivré par le module d'extraction de rythme 82 et le signal d'erreur fourni par le module de multiplexage 110.

Enfin, le signal délivré sur le module STM1 est formé au moyen d'un module de mise en série et de codage 114 alimenté d'une part par le signal délivré par le module d'insertion d'erreurs A1A2 112 et, d'autre part, par le signal d'horloge du signal du STM16 divisé par 8 et le signal d'alarme de perte de signal (LOS).

Ce module sérialise le signal du STM1 et le code en CMI. Il coupe en outre l'émission du signal de sortie lorsque le signal de perte de signal est à 1.

Il à noter que les différents modules entrant dans la constitution de cet étage de réception d'un signal numérique à haut débit peuvent être réalisés au moyen de composants identiques à ceux utilisés pour l'étage d'émission, par un ASIC, un FPGA ou par un composant intégré dans l'un de ces deux types de composants.

## Revendications

1. Dispositif de transfert d'informations entre deux signaux numériques, véhiculés par au moins un module de transmission de signaux (STM1,STM16), caractérisé en ce qu'il comporte des moyens de sélection (26,44;62,86) de caractéristiques d'un signal numérique d'entrée contenant lesdites informations, des moyens de transmission directe (28,46;78,94) vers un signal numérique de sortie et des moyens de positionnement (28,46;80;114) dans celui-ci, d'éléments du signal d'entrée véhiculant des premières caractéristiques autorisées, par les moyens de sélection à être directement transférées vers le signal de sortie de telle sorte qu'une variation desdites premières caractéristiques dudit signal d'entrée provoque une variation identique des premières caractéristiques dudit signal de sortie, des moyens de mesure (30,32,48, 50;72,74,90,92,98) de deuxième caractéristiques du signal d'entrée identifiées par les moyens de sélection, et des moyens de modification (78,80,102,110) du signal de sortie reliés aux moyens de mesure (30,32,48,50;72,74, 90,92,98) et adaptés pour modifier le signal de sortie à partir des valeurs des deuxièmes caractéristiques fournies par lesdits moyens de mesure de telle sorte que lesdites deuxièmes caractéristiques du signal de sortie et du signal d'entrée soient identiques.

2. Dispositif de transfert d'informations selon la revendication 1, caractérisé en ce que le signal numérique d'entrée est un signal tramé et en ce qu'il comporte en outre des moyens d'extraction du rythme (56,82) du signal d'entrée, lesdits moyens de sélection (62,86) comprenant un ensemble de compteurs (84) synchronisés avec ledit signal d'entré et adaptés pour assurer une division dudit rythme en vue de l'obtention d'une trame dudit signal d'entrée, et des moyens de décodage adaptés pour assurer la détection des données de ladite trame.

3. Dispositif de transfert d'informations selon l'une des revendications 1 et 2, caractérisé en ce que les moyens de transmission directe comprennent des moyens d'échantillonnage (94) desdits éléments du signal d'entrée contenant lesdites premières caractéristiques autorisées par lesdits moyens de sélection à être directement transférée vers le signal de sortie.

4. Dispositif de transfert d'informations selon l'une quelconque des revendications 1 à 3, caractérisé en ce que les premiers moyens de positionnement et les moyens de modification comportent des moyens de multiplexage (78,80,102,110) d'éléments du signal d'entrée avec le signal de sortie, alimentés par ledit signal d'entrée et par les signaux provenant desdits moyens de sélection (26,44;62,86).

5. Dispositif de transfert d'informations selon l'une quelconque des revendications 1 à 4, caractérisé en ce que les moyens de mesure des deuxièmes caractéristiques du signal d'entrée comportent des moyens de calcul (72,74,90,92,98) desdites deuxièmes caractéristiques à partir d'éléments du signal d'entrée provenant des moyens de sélection (26,44;62,86).

6. Dispositif de transfert d'informations selon l'une quelconque des revendications 1 à 5, caractérisé en ce que les moyens de sélection, les moyens de transmission directe, les moyens de modification et les moyens de positionnement sont constitués chacun par des circuits de composants logiques.

7. Générateur de signaux numériques de données à haut débit à partir de signaux numériques de données à bas débit, caractérisé en ce qu'il comporte un dispositif de transfert d'informations selon l'une quelconque des revendications 2 à 5, et en ce qu'il comporte des moyens de multiplication de fréquence (58) reliés aux moyens d'extraction de rythme (56) et aux moyens de modification (78,80), en vue d'engendrer, à partir d'un signal délivré par les moyens d'extraction de rythme un signal d'horloge pour le signal numérique de données à haut débit.

8. Générateur selon la revendication 7, caractérisé en ce qu'il comporte en outre des moyens de mémorisation (66) de données reliés aux moyens de transmission directe et des moyens de sélection de données (62) en vue d'assurer sélectivement le transfert, vers le signal numérique de données à haut débit, de données du signal numérique de données à bas débit et desdites données stockées dans les moyens de mémorisation (66).

9. Générateur selon l'une des revendications 7 et 8, caractérisé en ce que les deuxièmes caractéristiques du signal numérique de données à bas débit sont constituées par des données comprenant une erreur sur un mot de verrouillage de trame (A1,A2) et/ou une erreur sur un mot de surveillance d'erreur (B1) d'une section élémentaire régénérée du signal à bas débit.

10. Générateur de signaux numériques de données à bas débit à partir de signaux numériques de données à haut débit, caractérisé en ce qu'il comporte un dispositif de transfert d'informations selon l'une quelconque des revendications 2 à 6, et en ce qu'il comporte des moyens de division de fréquence (84) reliés aux moyens d'extraction de rythme (82) et aux moyens de modifications (102,110) en vue d'engendrer, à partir du signal délivré par lesdits moyens d'extraction de rythme, un signal d'horloge pour un signal numérique de données à bas débit.

11. Générateur selon la revendication 10, caractérisé en ce que les deuxièmes caractéristiques du signal numérique de données à haut débit sont constituées par des données comprenant une erreur sur un mot de verrouillage de trame (A1,A2), une erreur sur un mot de surveillance d'erreur (B1) d'une section élémentaire régénérée et/ou une erreur sur un mot de surveillance d'erreur (B2) d'une section de multiplexage du signal numérique de données à haut débit.
